Europäisches Patentamt

European Patent Office

Office européen des brevets

(19)

(11)  EP 0 717 073 B1

(12)  **EUROPÄISCHE PATENTSCHRIFT**

(45) Veröffentlichungstag und Bekanntmachung des Hinweises auf die Patenterteilung:
**11.10.2000  Patentblatt 2000/41**

(51) Int Cl.[7]: **C08K 9/06**, C08L 63/00, C08L 51/00, C08K 3/22

(21) Anmeldenummer: **95810765.8**

(22) Anmeldetag: **05.12.1995**

(54) **Core/Shell-Zähigkeitsvermittler enthaltende härtbare Epoxidharz-Giessmassen**

Curable compositions based on epoxy resins comprising a core/shell impact modifier

Compositions durcissables à base de résines époxydes contenant un modificateur de résistance au choc ayant une structure core/shell

(84) Benannte Vertragsstaaten:
**CH DE ES FR GB IT LI**

(30) Priorität: **13.12.1994  CH 377594**

(43) Veröffentlichungstag der Anmeldung:
**19.06.1996  Patentblatt 1996/25**

(73) Patentinhaber: **Ciba Specialty Chemicals Holding Inc.
4057 Basel (CH)**

(72) Erfinder:
• **Weidmann, Ulrich, Dr.
CH-4055 Basel (CH)**
• **Peyer, Robert Peter, Dr.
CH-4415 Lausen (CH)**

(56) Entgegenhaltungen:
**EP-A- 0 391 183      US-A- 4 529 755**

• **CHEMICAL ABSTRACTS, vol. 116, no. 8, 24.Februar 1992 Columbus, Ohio, US; abstract no. 60984, "Alumina-filled, cured epoxy resins with high strength" XP002012171 & JP-A-00 323 715 (MEIDENSHA) 23.Oktober 1991**
• **DATABASE WPI Derwent Publications Ltd., London, GB; AN 92-111140 XP002012172 & JP-A-04 055 463 (MEIDENSHA ) , 24.Februar 1994**
• **DATABASE WPI Derwent Publications Ltd., London, GB; AN 88-136390 XP002012173 & JP-A-63 077 927 (FUJITSU) , 8.April 1988**
• **J. ADHESION, Bd. 19, 1985, Seiten 15-27, XP000578877 J.E. SOHN: "Improved matrix-filler adhesion."**

Bemerkungen:
Die Akte enthält technische Angaben, die nach dem Eingang der Anmeldung eingereicht wurden und die nicht in dieser Patentschrift enthalten sind.

EP 0 717 073 B1

## Beschreibung

Die vorliegende Erfindung betrifft härtbare Epoxidharz-Giessmassen, die einen Zähigkeitsvermittler (toughener) und als Füllstoff ein mit einem Silan beschichtetes Aluminiumoxid enthalten, sowie deren Verwendung zum Umhüllen oder Beschichten von elektrischen oder elektronischen Bauteilen.

Es ist bekannt, Giessharzmassen auf Basis von Epoxidharzen mit einem Zähigkeitsvermittler und Füllstoffen zu modifizieren, um Formstoffe mit verbesserter Bruchzähigkeit zu erhalten. Wie aus EP-A-0 391 183 hervorgeht, ist bei Verwendung von unbeschichtetem Aluminiumoxid als Füllstoff zusammen mit einem Zähigkeitsvermittler im Vergleich zu der Verwendung von Quarz zusammen mit einem Zähigkeitsvermittler ein höherer Füllgrad erforderlich, um Formstoffe mit etwa gleich guter Bruchzähigkeit zu erhalten. Mit Aluminiumoxid hochgefüllte Giessharzmassen haben aber den Nachteil, dass sich ihre Verarbeitungseigenschaften durch Erhöhung der Viskosität der härtbaren Giessmassen verschlechtern, und Formstoffe auf Basis von derart gefüllten Epoxidharzen haben zudem den Nachteil, dass sich ihre Zugfestigkeitseigenschaften verschlechtern.

Es wurde nun gefunden, dass man diesen Nachteil vermeiden kann, indem man den Epoxidharz-Giessmassen ausser einem Zähigkeitsvermittler ein mit einem Silan beschichtetes feinteiliges Aluminiumoxid zusetzt.

Gegenstand vorliegender Erfindung sind somit härtbare Epoxidharz-Giessmassen, enthaltend

a) ein aromatisches oder cycloaliphatisches Epoxidharz mit durchschnittlich mehr als einer 1,2-Epoxidgruppe im Molekül,
b) ein Härtungsmittel für das Epoxidharz in für die Aushärtung des Epoxidharzes ausreichender Menge,
c) ein Core/Shell-Polymer
d) ein mit einem Silan der Formel I

$$R_{4-(n+1)}\text{-Si-}(OR')_{n+1} \tag{I},$$

worin R für ein Alkyl mit 1-4 C-Atomen, eine Phenyl-, Glycidyloxypropyl-, Mercaptopropyl- oder Aminopropylgruppe steht, R' ein Alkyl mit 1 bis 12 C-Atomen bedeutet und n für null oder eine Zahl von 1 bis 3 steht, beschichtetes Aluminiumoxid mit einer Korngrößenverteilung von 0,1 bis 120 $\mu$m.

Als Komponente a) können für die erfindungsgemässen härtbaren Epoxidharz-Giessmassen die üblichen in der Epoxidharztechnik verwendeten aromatischen oder cycloaliphatischen Epoxidverbindungen eingesetzt werden. Beispiele für solche Epoxidverbindungen sind:

I) Polyglycidyl- und Poly-($\beta$-methylglycidyl)-ester, erhältlich durch Umsetzung einer aromatischen oder cycloaliphatischen Verbindung mit mindestens zwei Carboxylgruppen im Molekül und Epichlorhydrin bzw. $\beta$-Methylepichlorhydrin. Die Umsetzung erfolgt zweckmässig in der Gegenwart von Basen.

Als Verbindung mit mindestens zwei Carboxylgruppen im Molekül können aromatische Polycarbonsäuren, wie beispielsweise Phthalsäure, Isophthalsäure oder Terephthalsäure verwendet werden. Beispiele für cycloaliphatische Polycarbonsäuren sind Tetrahydrophthalsäure, 4-Methyltetrahydrophthalsäure, Hexahydrophthalsäure oder 4-Methylhexahydrophthalsäure.

II) Polyglycidyl-oder Poly-($\beta$-methylglycidyl)-ether, erhältlich durch Umsetzung einer aromatischen oder cycloaliphatischen Verbindung mit mindestens zwei freien alkoholischen Hydroxylgruppen und/oder phenolischen Hydroxylgruppen und Epichlorhydrin oder $\beta$-Methylepichlorhydrin unter alkalischen Bedingungen, oder in Anwesenheit eines sauren Katalysators und anschliessende Alkalibehandlung.

Die Glycidylether dieses Typs leiten sich beispielsweise von einkerningen Phenolen ab, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol, oder 4-tert.-Butylphenol oder durch Kondensation mit Bisphenolen, wie solche der oben genannten Art.

Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)anilin oder p,p'-Bis-(2-hydroxyethylamino)-diphenylmethan.

III) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

IV) Poly-(N-glycidyl)-verbindungen, erhältlich durch Dehydrochlorierung der Reaktionsprodukte von Epichlorhydrin mit aromatischen Aminen, die mindestens zwei Aminwasserstoffatome enthalten. Bei diesen Aminen handelt es sich zum Beispiel um Anilin, Bis(4-aminophenyl)-methan, m-Xylylendiamin oder Bis-(4-methylaminophenyl)-methan.

Es lassen sich aber auch Epoxidharze verwenden, bei denen die 1,2-Epoxidgruppen an unterschiedliche Heteroatome bzw. funktionelle Gruppen gebunden sind; zu diesen Verb bindungen zählen beispielsweise das N,N,O-Triglycidylderivat des 4-Aminophenols, der Glycidylether-glycidylester der Salicylsäure.

Es können auch Gemische von Epoxidharzen verwendet werden.

Bevorzugt verwendet man zur Herstellung der erfindungsgemässen härtbaren Epoxidharz-Giessmassen als Komponente a) einen flüssigen oder festen aromatischen oder cycloaliphatischen Glycidylether oder -ester, insbesondere einen Bisphenol A- oder -F-diglycidylether oder einen cycloaliphatischen Diglycidylester.

Als feste aromatische Epoxidharze kommen Verbindungen mit Schmelzpunkten oberhalb Raumtemperatur bis etwa 250 °C in Betracht. Bevorzugt liegen die Schmelzpunkte der festen Epoxidverbindungen im Bereich von 50 bis 150 °C. Solche festen Epoxidverbindungen sind bekannt und zum Teil im Handel erhältlich. Als feste Polyglycidylether und -ester können auch die durch Vorverlängerung von flüssigen Polyglycidylethern und -estern erhaltenen Advancement-Produkte verwendet werden.

Zur Herstellung der erfindungsgemässen härtbaren Epoxidharz-Giessmassen können als Komponente b) die üblichen Härtungsmittel für Epoxidharze, wie beispielsweise Dicyandiamid, Polycarbonsäuren, Polycarbonsäureanhydride, Polyamine, amingruppenhaltige Addukte aus Aminen und Polyepoxidverbindungen sowie Polyole verwendet werden.

Als Polycarbonsäuren eignen sich zum Beispiel aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die erfindungsgemässen härtbaren Epoxidharz-Giessmassen aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harze, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren.

Als aliphatische Polyole für die erfindungsgemässen härtbaren Epoxidharz-Giessmassen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die erfindungsgemässen härtbaren Epoxidharz-Giessmassen beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol, oder 4-tert.-Butylphenol oder durch Kondensation mit Bisphenolen, solche der oben genannten Art, eingesetzt werden.

Es können auch katalytisch wirkende Härtungsmittel zur Herstellung der erfindungsgemässen härtbaren Epoxidharz-Giessmassen verwendet werden, wie tertiäre Amine, beispielsweise 2,4,6-Tris-(dimethylaminoethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe und Chelate, die durch Umsetzung von Bortrifluorid mit zum Beispiel 1,3-Diketonen erhalten werden. Bei Verwendung von katalytisch wirkenden Härtungsmitteln suspendiert man diese vorzugsweise im Zähigkeitsvermittler. Dabei werden vorzugsweise auf 10 Gewichtsteile Zähigkeistvermittler 0,1 bis 10 Gewichtsteile Härtungskatalysator eingesetzt.

Es können auch Gemische von Härtungsmitteln für die erfindungsgemässen Giessharzmassen verwendet werden, sofern sie untereinander nicht reagieren.

Vorzugsweise enthalten die erfindungsgemässen Giessharzmassen ein Polycarbonsäureanhydrid, insbesondere ein aromatisches oder cycloaliphatisches Polycarbonsäureanhydrid als Komponente b).

Bei der Härtung der erfindungsgemässen Giessharzmassen können auch geeignete Härtungsbeschleuniger eingesetzt werden. Beispielsweise können bei Verwendung von Dicyandiamid, Polycarbonsäuren und deren Anhydriden als Beschleuniger tertiäre Amine oder deren Salze, quatemäre Ammoniumverbindungen oder Alkalimetallalkoxide verwendet werden.

Core/Shell-Polymere haben in der Regel einen weichen Kern (Core) aus einem elastomeren Material, der im Epoxidharz unlöslich ist. Darauf aufgepfropft ist eine Schale (Shell) aus polymerem Material, die vorzugsweise keine reaktionsfähige Gruppen aufweist. Das Core/Shell-Polymer kann auch ein sogenanntes Multicore/Shell-Polymer sein, wie beispielsweise ein solches mit der Aufbaufolge weicher Kern, harte Schale, weiche Schale und harte Schale. Solche Polymere sind beispielsweise in der GB-A-2,039,496 beschrieben.

Beispiele für Elastomere, die als Core-Material eingesetzt werden können, sind Polybutadien, Polyacrylsäure- und Polymethacrylsäureester sowie deren Co- oder Terpolymere mit Polystyrol, Polyacrylnitril oder Polysulfid.

Vorzugsweise enthält das Core-Material Polybutadien oder Polybutylacrylat.

Beispiele für polymere Shell-Materialien sind Polystyrol, Polyacrylnitril, Polyacrylat- und -methacrylatmono-, -co- oder -terpolymere oder Styrol/Acrylnitril/Glycidylmethacrylat-Terpolymere.

Vorzugsweise wird als Shell-Material Polymethylmethacrylat eingesetzt.

Die Grösse solcher Core/Shell-Partikel beträgt zweckmässig 0,05-30 μm, vorzugsweise 0,05-15 μm. Insbesondere gelangen Core/Shell-Partikel mit einer Grösse von kleiner als 1 μm zur Anwendung.

Die Core/Shell-Polymere lassen sich nach der z.B. im US-Patent 4,419,496 oder der EP-A-0 045 357 beschriebenen Weise herstellen.

Vorzugsweise enthalten die erfindungsgemässen Giessmassen Zähigkeitsvermittler, die keine reaktiven Gruppen aufweisen, die mit dem jeweiligen Epoxidharz reagieren könnten.

Bevorzugt werden Core/Shell-Polymere eingesetzt, die einen Kern (Core) aus Polybutadien oder Polybutadien/Polystyrol enthalten. Dieses Core-Material ist vorzugsweise teilvernetzt. Weitere Core-Materialien sind Polyacrylate und -methacrylate, insbesondere Polyacrylsäure- und Polymethacrylsäureester sowie deren Co- oder Terpolymere.

Die Schale (Shell) besteht vorzugsweise aus Polymeren auf der Basis von Methylmethacrylat, Methacrylsäurecyclohexylester, Acrylsäurebutylester, Styrol, Methacrylnitril.

Die Menge an Zähigkeitsvermittler in den erfindungsgemässen härtbaren Epoxidharz-Giessmassen beträgt vorzugsweise bis zu 80 Gew.-%, insbesondere bis zu 50 Gew.-%, bezogen auf das Epoxidharz.

Vorzugsweise liegen in den erfindungsgemässen härtbaren Epoxidharz-Giessmassen die Komponenten a) und c) zusammen als Suspension vor, die zudem lagerstabil ist und den Zähigkeitsvermittler in homogener Verteilung enthält. Solche Suspensionen können hergestellt werden, in dem man entweder

1., bei Verwendung von flüssigen Epoxidharzen, die wässrige Emulsion des Zähigkeitsvermittlers gegebenenfalls in Gegenwart eines Lösungsmittels dem Epoxidharz zugibt und das Wasser oder Wasser/Lösunsgmittelgemisch unter Vakuum abdestilliert oder

2., bei Verwendung von festen Epoxidharzen, das feste Epoxidharz aufschmilzt oder in einem geeignetem Lösungsmittel löst und die wässrige Emulsion des Zähigkeisvermittlers dem Epoxidharz zugibt und anschliessend das Wasser bzw. Wasser/Lösungsmittelgemisch unter Vakuum abdestilliert.

Solche lagerstabilen Suspensionen aus einem Epoxidharz und einem darin suspendierten Zähigkeitsvermittler eignen sich in einfacher und praktischer Weise zur Herstellung von härtbaren Epoxidharzzusammensetzungen mit homogener Verteilung des Zähigkeitsvermittlers auch in der Epoxidharzzusammensetzung, wobei diese ebenfalls als Suspension vorliegen kann. Solche Suspensionen stellen somit verarbeitungstechnisch gesehen eine Vereinfachung zur Herstellung von härtbaren Epoxidharzzusammensetzungen mit homogener Verteilung eines darin enthaltenen Zähigkeitsvermittlers dar. Ausserdem wird bei der Herstellung solcher Epoxidharzzusammensetzungen in vorteilhafter Weise eine gewisse Qualitätskonstanz erreicht.

Aluminiumoxid, das zum Beschichten mit einem Silan der Formel I verwendet werden kann, ist im Handel erhältlich, mit einer Korngrösseverteilung von etwa 0,1 bis etwa 120 μm.

Vorzugsweise verwendet man zur Herstellung der Komponente d) ein Aluminiumoxid mit einer Korngrösseverteilung von 1,0 bis 60 μm.

Die zur Beschichtung des Aluminiumoxids verwendeten Silane der Formel I sind allgemein bekannt, beispielsweise aus der Informationsschrift "Organofunctional Silanes - A Profile" (1981) der Firma Union Carbide, aus Journal of Materials Science 18, 1983, Seite 208-216, und aus der "Informationsschrift 1985" der Firma Shin Etsu, und zum Teil im Handel erhältlich, beispielsweise das γ-Glycidyloxypropyltrimethoxysilan und das y-Mercaptopropyltrimethoxysilan von den Firmen Union Carbide und Shin Etsu.

Vorzugsweise verwendet man zum Beschichten des Aluminiumoxids ein Silan der Formel I, worin R für eine Methyl-, Ethyl-, Phenyl-, Glycidyloxypropyl-, Mercaptopropyl- oder Aminopropylgruppe steht, R' ein Alkyl mit 1-4 C-Atomen bedeutet und n für 2 steht.

Die Beschichtung des feinteiligen Aluminiumoxids mit einem Silan der Formel I erfolgt in bekannter Weise, indem man beispielsweise die Füllstoffe in einer Kugelmühle vorlegt, das Silan während des Mahlens zugibt, wobei flüssige Silane vorteilhaft mit Hilfe einer geeigneten Dosiereinrichtung, Pipette oder Spritze dem Aluminumoxid zugegeben werden, die Mischung mehrere Stunden mahlt und anschliessend die Kugeln über ein grobmaschiges Sieb entfernt.

Insbesondere werden als Beschichtungsmittel γ-Glycidyloxypropyltrimethoxysilan oder γ-Mercaptopropyltrimethoxysilan verwendet.

Der Anteil der Komponente d) in den erfindungsgemässen härtbaren Epoxidharz-Giessmassen beträgt im allgemeinen von 20 bis 80 Gew.-%, bezogen auf die gesamte Epoxidharz-Giessmasse, vorzugsweise von 40 bis 80 Gew.-%, insbesondere von 55 bis 70 Gew.-%.

Die erfindungsgemässen Epoxidharz-Giessmasssen können gewünschtenfalls zusätzlich weitere feinteilige Füllstoffe enthalten. Als solche kommen die üblichen in der Epoxidharztechnik verwendeten Füllstoffe in Betracht, wie beispielsweise Quarzmehl oder Pulver aus Quarzgut, Glimmer, Kaolin, Dolomit, Wollastonit, Glasfasern, Graphit oder Russ.

Die erfindungsgemässen härtbaren Epoxidharz-Giessmassen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Epoxidharz-Giessmassen zu Beschichtungen, Umhüllungen oder dergleichen erfolgt in für die Epoxidharztechnik üblicher Weise, wie sie beispielsweise im "Handbook of Epoxy Resins", 1967, von H. Lee und K.Neville beschrieben wird.

Die erfindungsgemässen härtbaren Epoxidharz-Giessmassen eignen sich ausgezeichnet als Beschichtungsmassen sowie als Umhüllungssysteme für elektrische und elektronische Bauteile, insbesondere für elektrische Bauteile, die gute bruchmechanische Eigenschaften im Mittel- und insbesondere im Hochspannungsbereich erfordern, wie beispielsweise Stromumwandler oder elektrische Isolatoren.

In den folgenden Beispielen werden folgende Suspensionen aus einem Epoxidharz und einem Core/Shell-Polymer oder mit einem Core/Shell-Polymer modifizierte Epoxidharze sowie folgende mit einem Silan beschichtete Füllstoffe eingesetzt.

<u>Suspension A</u> (Diglycidylether-Core/Shell-Polymer-Suspension)

a) Herstellung eines Core/Shell-Polymeres:

202,7 g Polybutadienlatex (BL 2004 K der Firma Bayer AG) mit einem Feststoffgehalt von 59,2 % und 397,3 g deionisiertes Wasser werden in einem 1 Liter-Planschliffkolben, der mit Doppelmantel, Glasankerrührer, Thermometer, Kühler, Umlaufthermostat und Gasanschluss ausgerüstet ist, unter Stickstoff vorgelegt und mit 100 rpm (Umdrehungen pro Minute) gerührt. Das Gemisch wird auf 80°C ± 1°C aufgeheizt. Nach etwa 55 Minuten (min) ist eine Innentemperatur von 80°C erreicht. Nun wird mit dem Zutropfen von 120,0 g destilliertem Methacrylsäuremethylester (purum, der Firma Fluka, Schweiz) und einer Lösung von 4,0 g Kaliumperoxiddisulfat und 3,5 g Dodecylbenzolsulfonsäure-Nasalz in 110 ml destilliertem Wasser begonnen. Nach 3,5 Stunden (h) liegt eine homogene, weisse Emulsion vor. Nach insgesamt 6 h 10 min ist die Zugabe des Methylmethacrylats sowie des Initiators beendet.

Es wird während weiteren 2 h bei 80°C nachgerührt. Am Ende dieser Zeit werden 3 ml einer 20%igen Emulsion von n-Octadecyl-3-(3,5-di-tert.-butyl-4-hydroxyphenyl)-propionat der homogenen weissen Emulsion beigegeben, und das Ganze wird dann auf Raumtemperatur (RT) abgekühlt. Bei RT ist die Emulsion ebenfalls homogen und weiss gefärbt. Sie wird durch Glaswolle filtriert Es sind keine Agglomerate vorhanden. Die Emulsion wird auf 865 g verdünnt, was einen Festkörpergehalt von 27,2 % ergibt. Die so erhaltene Emulsion wird als Zähigkeitsvermittler (toughener) eingesetzt.

b) In einem 2 Liter-Planschliffkolben, der mit Glasankerrührer, Thermometer, Kühler, Destillationsrohr mit Vorlage und Vakuum-Anschluss ausgerüstet ist, werden 600 g flüssiger Bisphenol A-digylcidylether mit einem Epoxidgehalt von 5,42 Äquivalenten/kg vorgelegt, und 220,6 g der gemäss Beispiel Aa) hergestellten wässrigen Emulsion des Core/Shell-Polymers dazugegeben. Das Ganze wird während 15 min verrührt Anschliessend wird das homogene Gemisch auf etwa 80°C erwärmt und auf 15000-20000 Pa (150-200 mbar) evakuiert, wobei das Wasser abdestilliert. Gegen Ende der Destillation wird der Druck auf 4000-5000 Pa (40-50 mbar) erniedrigt, wobei innerhalb von etwa 30 min das restliche Wasser entfernt wird. Es wird eine homogene weisse, bei 80°C gut rührbare Suspension erhalten, die nach Abkühlen auf 50°C abgefüllt wird.

| Ausbeute | 656 g |
| Epoxidgehalt | 4,7-5,0 Äquivalente/kg |
| Gehalt an Zähigkeitsvermittler | 10 phr*, bezogen auf das Epoxidharz. |

*phr = parts per hundred (Gewichtsteile pro 100 Gewichtsteile Epoxidharz).

Suspension B (Diglycidylester-Core/Shell-Polymer-Suspension)

a) Herstellung eines Core/Shell-Polymeres gemäss der Herstellungsbeschreibung unter Suspension A a). Es wird eine Emulsion mit einem Festkörpergehalt von 27,2 % erhalten.

b) Die Herstellung der Diglycidylester-Core/Shell-Polymer-Suspension erfolgt gemäss der Herstellungsbeschreibung unter Suspension A b), wobei als Epoxidharz nun 600g Cyclohexan-1,2-dicarbonsäurediglycidylester mit einem Epoxidgehalt von 5,6-6,2 Äquivalenten/kg eingesetzt werden. Man erhält eine gut rührbare Suspension.

| Epoxidgehalt | 5,3 Äquivalente/kg |
| Gehalt an Zähigkeitsvermittler | 10 phr. |

Suspension C: (Diglycidylether-Core/Shell-Polymer-Suspension)

a) Herstellung eines Core/Shell-Polymeres gemäss Herstellungsbeschreibung unter Suspension Aa). Es wird eine Emulsion mit einem Festkörpergehalt von 28,15 % erhalten.

b) In einem 3 Liter-Planschliffkolben, ausgerüstet wie bei der Herstellungsbeschreibung unter Suspension Ab) angegeben, werden 1050,0 g eines festen, mit 0,84 Gew.-% Nonylphenolhydroxyethylether modifiziertem Bisphenol A-diglycidylethers mit einem Epoxidgehalt von 2,55-2,7 Äquivalenten/kg und einem Schmelzbereich von 35-50°C vorgelegt und ohne Rühren auf etwa 130°C erwärmt. Dann wird die gemäss oben unter a) erhaltene Emulsion bei dieser Temperatur zugegeben und während 15 min verrührt. Das Gemisch wird auf 65000-70000 Pa (650-700 mbar) evakuiert und bei diesem Vakuum wird während etwa 2 h der grösste Teil des Wassers über das Destillationsrohr und die Vorlage abdestilliert. Es wird vorsichtig weiter evakuiert, wobei die Masse vorübergehend recht viskos wird. Zum Schluss wird die Masse während 30 min bei 2000-3000 Pa (20-30 mbar) und 130°C und anschliessend 15 min im Hochvakuum bei 10-20 Pa (0,1-0,2 mbar) gerührt. Man erhält eine weisse, trübe, viskose Masse, die bei etwa 120°C auf beschichtetes Papier ausgegossen wird. Nach dem Abkühlen wird die erstarrte Masse mechanisch zerkleinert.

| Epoxidgehalt | 2,40 Äquivalente/kg |
| Gehalt an Zähigkeitsvermittler | 10 phr. |

Beschichtetes $Al_2O_3$ (Füllstoff I)

In eine Kugelmühle aus Porzellan, die zu etwa 1/3 ihres Volumen mit Keramikkugeln gefüllt ist, werden 1000 g Aluminiumoxid eingeben. Dann setzt man 5 g γ-Glycidyloxypropyltrimethoxysilan hinzu und vermahlt die Mischung 15 h lang. Anschliessend werden die Kugeln über ein grobmaschiges Rüttelsieb entfernt. Das so beschichtete Aluminiumoxid wird in dieser Form in den Beispielen eingesetzt.

Beispiel 1

100 g Suspension A werden mit 87 g eines modifizierten Methylhexahydrophthalsäureanhydrids, im Handel erhältlich unter der Produktbezeichung "XB 5996" von CIBA-GEIGY AG, unter Rühren bei einer Temperatur von 50-60°C homogenisiert Anschliessend werden 560 g Füllstoff I hinzugefügt. Die Mischung wird unter Rühren auf 80°C erwärmt, 7 Minuten unter einem Druck von 300 Pa (3 mbar) evakuiert und in auf 100°C vorgeheizte Platten vergossen. Die Gelierzeit der härtbaren Epoxidharzmischung beträgt bei 140°C 8 min/21 Sekunden (sec). Die härtbare Mischung weist einem Füllstoffgehalt von 60 Gew.-%, bezogen auf die gesamte Mischung, auf. Nach einer Härtung von 2 h bei 100°C, 10 h bei 140°C und 2 h bei 160°C werden an den Prüfkörpern folgende Eigenschaften gemessen:

| | |
|---|---|
| Tg-Wert (gemessen mit DSC[*]) | = 150°C |
| Biegefestigkeit (gemäss ISO 178) | = 131 N/mm$^2$ |
| Randfaserdehnung | = 2,34 % |
| E-Modul aus Biegeversuch | = 7721 N/mm$^2$ |
| Zugfestigkeit (gemäss ISO R527) | = 82 N/mm$^2$ |
| maximale Bruchdehnung | = 2,28 % |
| E-Modul aus Zugversuch | = 7392 N/mm$^2$ |
| Double Torsion (gemäss DIN 51 221) Bruchenergie GIC | = 447 J/m$^2$ |
| kritischer Spannungsintensitätsfaktor K1C (Bruchzähigkeit) | = 1,95 MPa$\sqrt{m}$ |

[*] Differential Scanning Calorimeter

Beispiel 2

100 g Suspension B, 90 g Methylhexahydrophthalsäureanhydrid und 0,53 g Benzyldimethylamin werden kalt zusammengewogen und unter Rühren bei einer Temperatur von etwa 50-60°C gemischt. Nach der Zugabe von 391 g Füllstoff I wird die Temperatur der Mischung auf 80°C angehoben, homogenisiert, anschliessend bei 300 Pa (3 mbar) 10 min unter Rühren evakuiert, und dann in auf 100°C vorgewärmte Formen vergossen. Die Härtung der Giessmasse erfolgt während 2 h bei 100°C und 16 h bei 140°C. An den Prüfkörpern werden folgende Eigenschaften gemessen:

| | |
|---|---|
| Tg-Wert (gemessen mit DSC) | = 128°C |
| Biegefestigkeit (gemäss ISO 178) | = 128 N/mm$^2$ |
| Randfaserdehnung | = 1,56 % |
| E-Modul aus Biegeversuch | = 10972 N/mm$^2$ |
| Double Torsion (gemäss DIN 51 221) Bruchernergie G1C | = 521 J/m$^2$ |
| kritischer Spannungsintensitätsfaktor K1C | = 2,51 MPa$\sqrt{m}$. |

Beispiel 3

100 g Suspension C werden bei Raumtemperatur in einem Gefäss vorgelegt und auf 120°C erwärmt. Dann werden 45 g eines Härtergemisches aus 35 Gew.-Teilen Phthalsäureanhydrid und 65 Gew.-Teilen Tetrahydrophthalsäureanhydrid hinzugefügt und das ganze wird homogenisiert. Zu der klaren Lösung werden in Portionen 218 g Füllstoff I eingerührt. Nach 15 min wird die Mischung 3 min bei 300 Pa (3 mbar) entgast und in auf 100°C vorgewärmte Formen vergossen. Die Härtung der Giessmasse erfolgt während 16 h bei 140°C. An den Prüfkörpern werden folgende Eigenschaften gemessen:

| | |
|---|---|
| Tg-Wert (gemessen mit DSC) | = 133°C |

(fortgesetzt)

| | |
|---|---|
| Biegefestigkeit (gemäss ISO 178) | = 150 N/mm$^2$ |
| Randfaserdehnung (gemäss ISO 178) | = 2,79 % |
| E-Modul aus Biegeversuch | = 8257 N/mm$^2$ |
| Double Torsion (gemäss DIN 51 221) Bruchernergie G1C | = 777 J/m$^2$ |
| kritischer Spannungsintensitätsfaktor K1C | = 2,67 MPa$\sqrt{m}$. |

**Patentansprüche**

1. Härtbare Epoxidharz-Giessmassen, enthaltend

   a) ein aromatisches oder cycloaliphatisches Epoxidharz mit durchschnittlich mehr als einer 1,2-Epoxidgruppe im Molekül,
   b) ein Härtungsmittel für das Epoxidharz in für die Aushärtung des Epoxidharzes ausreichender Menge,
   c) ein Core/Shell-Polymer
   d) ein mit einem Silan der Formel I

$$R_{4-(n+1)}\text{-Si-}(OR')_{n+1} \tag{I},$$

   worin R für ein Alkyl mit 1-4 C-Atomen, eine Phenyl-, Glycidyloxypropyl-, Mercaptopropyl- oder Aminopropylgruppe steht, R' ein Alkyl mit 1 bis 12 C-Atomen bedeutet und n für null oder eine Zahl von 1 bis 3 steht, beschichtetes Aluminiumoxid mit einer Korngrößenverteilung von 0,1 bis 120 μm.

2. Epoxidharz-Giessmassen gemäss Anspruch 1, worin die Komponente a) einen flüssigen oder festen aromatischen oder cycloaliphatischen Glycidylether oder -ester darstellt.

3. Epoxidharz-Giessmassen gemäss Anspruch 1, worin die Komponente a) einen Bisphenol A- oder -F-diglycidylether oder ein cycloaliphatischen Diglycidylester darstellt.

4. Epoxidharz-Giessmassen gemäss Anspruch 1, worin die Komponente b) ein Polycarbonsäureanhydrid darstellt.

5. Epoxidharz-Giessmassen gemäss Anspruch 1, worin die Komponente b) ein aromatisches oder cycloalphatisches Polycarbonsäureanhydrid darstellt.

6. Epoxidharz-Giessmassen gemäss Anspruch 1, worin die Komponente c) einen Zähigkeitsvermittler darstellt, der keine reaktiven Gruppen aufweist, die mit dem jeweiligen Epoxidharz reagieren könnten.

7. Epoxidharz-Giessmassen gemäss Anspruch 1, worin die Komponenten a) und c) zusammen als Suspension vorliegen.

8. Epoxidharz-Giessmassen gemäss Anspruch 1, worin als Beschichtungsmittel ein Silan der Formel I, worin R für eine Methyl-, Ethyl-, Phenyl-, Glycidyloxypropyl-, Mercaptopropyl- oder Aminopropylgruppe steht, R' ein Alkyl mit 1-4 C-Atomen bedeutet und n für 2 steht, verwendet wird.

9. Epoxidharz-Giessmassen gemäss Anspruch 1, worin als Beschichtungsmittel γ-Glycidyloxypropyltrimethoxysilan oder γ-Mercaptopropyltrimethoxysilan verwendet wird.

10. Verwendung der härtbaren Epoxidharz-Giessmassen gemäss Anspruch 1 als Umhüllungs- oder Beschichtungsmittel für elektrische oder elektronische Bauteile.

## EP 0 717 073 B1

**Claims**

1. A curable epoxy resin casting composition, comprising

   a) an aromatic or cycloaliphatic epoxy resin having on average more than one 1,2-epoxy group in the molecule,
   b) a hardener for the epoxy resin in an amount sufficient to effect a full cure of the epoxy resin,
   c) a core/shell polymer
   d) an aluminium oxide coated with a silane of formula I

$$R_{4-(n+1)}\text{-Si-(OR')}_{n+1} \qquad (I),$$

   wherein R is an alkyl containing 1-4 carbon atoms, a phenyl, glycidyloxypropyl, mercaptopropyl or aminopropyl group, $R^1$ is an alkyl containing 1-12 carbon atoms and n is zero or a number from 1 to 3, having a particle size distribution of from 0.1 to 120 $\mu$m.

2. An epoxy resin casting composition according to claim 1, wherein component a) is a liquid or solid aromatic or cycloaliphatic glycidyl ether or glycidyl ester.

3. An epoxy resin casting composition according to claim 1, wherein component a) is a diglycidyl ether of bisphenol A or of bisphenol F or a cycloaliphatic diglycidyl ester.

4. An epoxy resin casting composition according to claim 1, wherein component b) is a polycarboxylic anhydride.

5. An epoxy resin casting composition according to claim 1, wherein component b) is an aromatic or cycloaliphatic polycarboxylic anhydride.

6. An epoxy resin casting composition according to claim 1, wherein component c) is a toughener containing no reactive groups that could react with the respective epoxy resin.

7. An epoxy resin casting composition according to claim 1, wherein components a) and c) are together in the form of a suspension.

8. An epoxy resin casting composition according to claim 1, wherein the coating agent is a silane of formula I in which R is a methyl, ethyl, phenyl, glycidyloxypropyl, mercaptopropyl or aminopropyl group, R' is an alkyl containing 1-4 carbon atoms and n is 2.

9. An epoxy resin casting composition according to claim 1, wherein the coating agent is γ-glycidyloxypropyltrimethoxysilane or γ-mercaptopropyltrimethoxysilane.

10. The use of a curable epoxy resin casting composition according to claim 1 as an encapsulant or coating agent for electrical or electronic components.


**Revendications**

1. Matières à couler de résines époxydes durcissables contenant

   a) une résine époxyde aromatique ou cycloaliphatique contenant en moyenne plus d'un groupe 1,2-époxyde dans la molécule,
   b) un agent durcisseur pour la résine époxyde en quantité suffisante pour le durcissement de la résine époxyde,
   c) un polymère noyau/enveloppe ("core/shell"),
   d) un oxyde d'aluminium ayant une granulométrie de 0,1 à 120 $\mu$m revêtu d'un silane de formule I

$$R_{4-(n+1)}\text{-Si-(OR')}_{n+1} \qquad (I),$$

9

où

R    représente un groupe alkyle ayant 1 à 4 atomes de carbone, un groupe phényle, glycidyloxypropyle, mercaptopropyle ou aminopropyle,

R'   représente un groupe alkyle ayant 1 à 12 atomes de carbone et

n    vaut zéro ou va de 1 à 3.

2.  Matières à couler de résines époxydes selon la revendication 1, où le constituant a) représente un éther ou ester glycidylique aromatique ou cycloaliphatique liquide ou solide.

3.  Matières à couler de résines époxydes selon la revendication 1, où le constituant a) représente un éther diglycidylique du bisphénol A ou du bisphénol F ou un ester diglycidylique cycloaliphatique.

4.  Matières à couler de résines époxydes selon la revendication 1, où le constituant b) représente un anhydride d'un acide polycarboxylique.

5.  Matières à couler de résines époxydes selon la revendication 1, où le constituant b) représente un anhydride d'un acide polycarboxylique aromatique ou cycloaliphatique.

6.  Matières à couler de résines époxydes selon la revendication 1, où le constituant c) représente un agent de ténacité, qui ne présente pas de groupes réactifs pouvant réagir avec la résine époxyde respective.

7.  Matières à couler de résines époxydes selon la revendication 1, où les constituants a) et c) se présentent ensemble sous forme de suspension.

8.  Matières à couler de résines époxydes selon la revendication 1, où l'on utilise comme agent de revêtement un silane de formule I, où R représente un groupe méthyle, éthyle, phényle, glycidyloxypropyle, mercaptopropyle ou aminopropyle, R' représente un groupe alkyle ayant 1 à 4 atomes de carbone et n vaut 2.

9.  Matières à couler de résines époxydes selon la revendication 1, où l'on utilise comme agent de revêtement le γ-glycidyloxypropyltriméthoxysilane ou la γ-mercaptopropyltriméthoxysilane.

10. Utilisation des matières à couler de résines époxydes selon la revendication 1 comme agent d'enrobage ou de revêtement de composants électriques ou électroniques.